# EUROPEAN PATENT APPLICATION

(11) **EP 2 202 614 A1**
(43) Date of publication of application: **30.06.2010**
(21) Application number: 09252852.0
(22) Date of filing: 21.12.2009
(51) Int. Cl.: G06F 3/033, G06F 3/048, H04N 1/00

(54) **User input apparatus for multifunction peripheral device**

(30) Priority: 26.12.2008 JP 2008334132
(71) Applicant: Brother Kogyo Kabushiki Kaisha, Nagoya-shi, Aichi-ken 467-8561 (JP)
(72) Inventor: Wakizaka, Masaaki, Nagoya-shi, Aichi-ken 467-8562 (JP); Watanabe, Toshinari, Nagoya-shi, Aichi-ken 467-8562 (JP)
(74) Representative: Smith, Samuel Leonard

(57) **Abstract**

An inputting apparatus (1) of a multi-function peripheral device including: a display portion (16) on which an image is displayed; an image storing portion (13) storing image data; a selecting section (S16) that selects image data; a display controlling section (S16) which displays the image on the basis of the selected image data; a detecting portion (31,32,33,34) which detects an approach-touch area of a detecting area to which is assigned a command for changing the image displayed, the approach-touch area having detected the approach or the touch of an input object; a change commanding section (S2,S4,S6) which commands to change the image displayed; and a changing-amount determining section (S15) which determines a changing amount of the image displayed, depending upon an area of the detected approach-touch area, wherein the selecting section changes the image data selected, in accordance with the determined changing amount.

## Description

### BACKGROUND OF THE INVENTION

### Field of the Invention

The present invention relates to an inputting apparatus.

### Description of the Related Art

Patent Document 1 (Japanese Patent Application Publication No. 8-76926) discloses a technique in which the number of pages (the page number) in which a page or pages is or are turned or flipped is changed on the basis of the number of fingers 42 which touch an upper surface of a touch panel 24. For example, where a user touches the touch panel 24 with one finger 42, and the finger 42 is moved leftward by an amount larger than a predetermined amount K, one of displayed pages is turned or flipped, while where the user touches the touch panel 24 with two fingers 24, and the fingers 24 are moved leftward by an amount larger than the predetermined amount K, two of the displayed pages are turned or flipped.

### SUMMARY OF THE INVENTION

However, in the above-described Patent Document 1, a slide operation is not performed, and it is required that the user touches the touch panel 24 several times in order to input a command for turning the page(s). Thus, the user unfortunately takes trouble to input the command for turning the page(s).

Further, once the user has touched the touch panel 24 and inputted a command relating to the number of the page(s) to be turned, the page(s) is or are turned on the basis of the inputted command until the touch is released (that is, the finger is moved away). Thus, the user cannot change the number of the page(s) while the page(s) is or are turned.

This invention has been developed in view of the above-described situations, and it is an object of the present invention to provide an inputting apparatus configured to realize a user-friendly slide operation.

The object indicated above may be achieved according to an aspect of the present invention which provides an inputting apparatus comprising: a display portion on which an image is displayed; an image storing portion configured to store image data based on which the image is displayed; a selecting section configured to select a part of image data stored in the image storing portion, the part corresponding to the image to be displayed on the display portion; a display controlling section configured to display the image on the display portion on the basis of the selected part of image data; a detecting portion configured to detect an approach-touch area of a detecting area to which is assigned a command for changing the image to be displayed on the display portion, the approach-touch area having detected the approach or the touch of an input object; a change commanding section configured to command to change the image to be displayed on the display portion where the detecting portion has detected the approach-touch area; and a changing-amount determining section configured to determine, in accordance with the command by the change commanding section, a changing amount of the image to be displayed on the display portion depending upon an area of the approach-touch area detected by the detecting portion, wherein the selecting section is configured to change the image data to be selected, in accordance with the changing amount determined by the changing-amount determining section.

According to the construction as described above, a user can adjust the changing amount of the displayed image while touching the detecting area with his or her finger(s) as the input object, by an easy operation such as a decrease in the touch areas by moving the finger away from the detecting area, and an increase in the touch areas by increasing the number of the finger(s) touching the detecting area. Thus, it is possible to realize an easy operation.

In the inputting apparatus according to the aspect, the display controlling section may be configured to display a plurality of images each having a display number on the display portion in a predetermined order on the basis of the image data, and the display controlling section may be configured to display, on the basis of the changed image data, at least one image respectively having a display number which is different from that of said at least one image previously displayed.

According to the construction as described above, since the image data the selecting section selects is changed in accordance with the determined changing amount, and the image is displayed on the basis of the changed image data, the order of the displayed images can be changed.

In the inputting apparatus according to the aspect, the display controlling section may be configured to display at least an image having a certain display number on the display portion on the basis of the selected part of image data, and the changing-amount determining section may be configured to determine the changing amount such that a difference between the display number of the image to be displayed on the display portion and the certain display number becomes a predetermined difference.

According to the construction as described above, since the image is displayed on the display portion such that the difference between the display number of the image being displayed on the display portion and the certain display number becomes the predetermined difference, the order of the displayed images can be changed depending upon the area of the approach-touch area.

In the inputting apparatus according to the aspect, the display controlling section may be configured to display a plurality of images respectively corresponding to a plurality of pages, in order of the plurality of pages on the basis of the image data, the display controlling section may be configured to display at least an image corresponding to a certain page on the display portion on the basis of the image data selected by the selecting section, and the changing-amount determining section may be configured to determine the changing amount such that a difference between the page of the image to be displayed on the display portion and the certain page becomes a predetermined difference.

According to the construction as described above, since the image is displayed on the display portion such that the difference between the page of the image being displayed on the display portion and the certain page becomes the predetermined difference, the order of the displayed images can be changed depending upon the area of the approach-touch area.

In the inputting apparatus according to the aspect, the changing-amount determining section may be configured to increase the changing amount where the predetermined difference takes a certain value than where the predetermined difference takes a value smaller than the certain value.

According to the construction as described above, since the changing amount is changed in accordance with a degree of the predetermined difference, the order of the displayed images can be changed depending upon the area of the approach-touch area.

In the inputting apparatus according to the aspect, where the selecting section has selected a part of the image data, a specific area of the image may be displayed on the display portion on the basis of the selected the part of the image data, and the display controlling section may be configured to display an area of the image which is changed from the specific area, by displaying the image on the basis of the changed image data.

According to the construction as described above, the area of the image displayed on the display portion can be changed on the basis of the changed image data by the easy inputting operation.

In the inputting apparatus according to the aspect, the display controlling section may be configured to display a certain area of the image on the display portion on the basis of the selected part of the image data, and the changing-amount determining section may be configured to determine the changing amount such that a difference between a position of an area of the image to be displayed on the display portion and a position of the certain area of the image becomes a predetermined difference.

According to the construction as described above, since the image is displayed on the display portion such that the difference between the position of the area of the image which is being displayed on the display portion and the position of the certain area of the image becomes the predetermined difference, the area of the image displayed on the display portion can be changed on the basis of the changed image data by the easy inputting operation.

The inputting apparatus according to the aspect, may further comprise a reference-area storing portion configured to store a value corresponding to a reference area and an approach-touch area obtaining section configured to obtain a value corresponding to the area of the approach-touch area, and the changing-amount determining section may be configured to determine the changing amount depending upon the value corresponding to the area of the approach-touch area with respect to the value corresponding to the reference area.

According to the construction as described above, the user can set the changing amount of the displayed image to a desired changing amount using the reference area.

In the inputting apparatus according to the aspect, the changing-amount determining section may be configured to determine the changing amount depending upon a change rate of the value corresponding to the area of the approach-touch area with respect to the value corresponding to the reference area.

According to the construction as described above, the changing amount of the displayed image can be set in accordance with the change rate by setting the reference area.

In the inputting apparatus according to the aspect, the changing-amount determining section further includes a judging section may be configured to judge whether the value corresponding to the area of the approach-touch area has been changed with respect to the value corresponding to the reference area or not, and the changing-amount determining section may be configured to determine the changing amount where the judging section has judged that the value of the approach-touch area has been changed with respect to the value corresponding to the reference area.

According to the construction as described above, the changing amount of the displayed image can be set to the desired changing amount in accordance with the judgment of the judging section.

In the inputting apparatus according to the aspect, the changing-amount determining section may be configured to determine the changing amount depending upon a change rate of the value corresponding to the area of the approach-touch area with respect to the value corresponding to the reference area.

According to the construction as described above, the changing amount of the displayed image can be set in accordance with the change rate.

The inputting apparatus according to the aspect, may further comprise an approach-touch area obtaining section configured to obtain a value corresponding to the area of the approach-touch area, and the changing-amount determining section includes a judging section configured to judge whether the value corresponding to the area of the approach-touch area has been changed or not, and where the judging section has judged that the value corresponding to the area of the approach-touch area has been changed, the changing-amount determining section may change the changing amount depending upon the change.

According to the construction as described above, the changing amount of the displayed image can be set to the desired changing amount in accordance with the change of the area of the approach-touch area.

In the inputting apparatus according to the aspect, the changing-amount determining section may be configured to change the changing amount depending upon a change rate of the value corresponding to the area of the approach-touch area.

According to the construction as described above, where the area of the approach-touch area has been changed, the changing amount of the image displayed in accordance with the change can be set

In the inputting apparatus according to the aspect, the display portion may include the detecting area in a displaying area of the display portion, the display controlling section may be configured to display a slide bar having a rod shape so as to overlap with the detecting area, the slide bar having an entire length representing a total number of the image data and having a plurality of sections defined at predetermined pitches from one to the other of opposite ends of the slide bar, wherein the image data is assigned to each of the sections, and the selecting section may be configured to change, to the certain display number, a display number added to an image based on the image data corresponding to one of the plurality of sections which corresponds to the approach-touch area.

According to the construction as described above, the changing amount of the displayed image can be changed also in the operation of the slide bar.

In the inputting apparatus according to the aspect, the display controlling section may be configured to display a slider which moves on the slider bar so as to follow the approach-touch area while having a length according to the number of pixels of the image displayed on the display portion, and where the changing amount is changed by the changing-amount determining section, a length of the slider may be changed in accordance with the changing amount, and the display controlling section may display the slider having the changed length.

According to the construction as described above, the user can visually recognize an amount of the slide.

### BRIEF DESCRIPTION OF THE DRAWINGS

The objects, features, advantages, and technical and industrial significance of the present invention will be better understood by reading the following detailed description of an embodiment of the invention, when considered in connection with the accompanying drawings, in which:
Fig. 1 is a perspective view showing an external structure of a multi-function peripheral (MFP) as an example of an inputting apparatus of the present invention;
Fig. 2A is a block diagram showing an electric construction of the MFP, Fig. 2B is a schematic view showing an example of a content of a moving-amount selecting table, and Fig. 2C is a schematic view showing an example of an electrode which detects touch of a user's finger where the finger has touched a touch panel;
Fig. 3A is a schematic view showing an example of a slide display displayed on an LCD, and Figs. 3B, 3C, and 3D are schematic views each showing an example of an input method of a right scroll key on the slide display;
Figs. 4A and 4B are schematic views each for explaining an example of an operating method of a slide bar on the slide display, and Figs. 4C and 4D" are schematic views each for explaining an example of an operating method of a slider on the slide display;
Fig. 5 is a flow-chart showing a display updating processing of the MFP;
Fig. 6 is a flow-chart showing a key-operation obtaining processing of the MFP;
Fig. 7 is a flow-chart showing a bar-operation obtaining processing of the MFP;
Fig. 8 is a flow-chart showing a slider-operation obtaining processing of the MFP;
Fig. 9 is a flow-chart showing a display updating processing of an MFP as an modification; and
Fig. 10A is a schematic view showing an example of a slide display in the case where images of respective newspaper articles are displayed on the LCD, and Figs. 10B, 10C, and 10D are schematic views each showing an example of an operational method of the right scroll key on the slide display

### DESCRIPTION OF THE EMBODIMENT

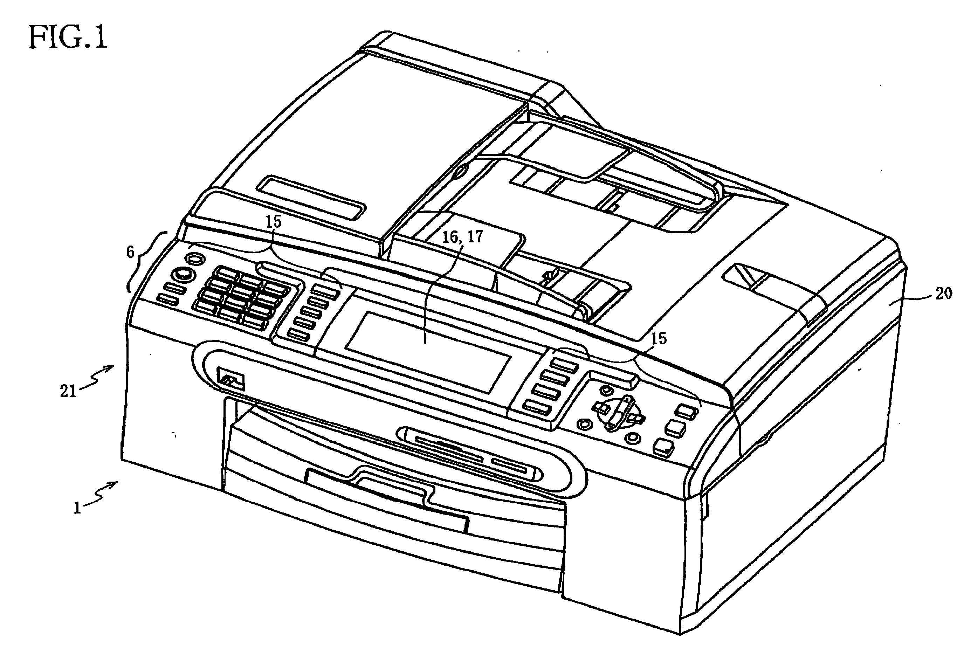

Hereinafter, there will be described an embodiment of the present invention by reference to the drawings. There will be explained, respectively referring to Figs. 1, 2A-2C, 3A-4D, 5-8, and 9-10D, an external structure of a multi-function peripheral (MFP) 1, a hardware configuration of an inputting apparatus, an example of an operation of the inputting apparatus, a display updating processing of the inputting apparatus, and modifications of the embodiment of the present invention.

On an upper front portion of the MFP 1 as the present embodiment, there are provided an LCD 16 as a part of a display portion on which an image or images can be displayed, a touch panel 17, and operational keys 15 which will be described below. A user can perform various settings and various controls of the MFP 1 by performing an inputting operation with the operational keys 15 or the touch panel 17.

In this MFP 1, where the user selects a desired one of a plurality of files or images (for example, a file for which the user wants to perform recording), a slide display of the files (in which the files are displayed so as to be slid) is performed on the LCD 16. The slide display is an operational display in which where all the files cannot be displayed at a time because the number of the files is too large, continuous display numbers are respectively added to all the files in order, and a predetermined number (e.g., six files) of all the files which have continuous display numbers are displayed so as to be arranged in ascending order (or in descending order).

In this slide display, a pertain number of displayed ones of the files are repeatedly replaced with or changed to other files of the certain number, whereby all the files can be displayed. In other words, in this slide display, all the files are displayed while the certain number of the files are replaced in each replacement. Further, in the slide display, each time when ones or all of the files which are being displayed are replaced with files whose display numbers are larger or smaller than those of the files being displayed, the files to be displayed at the next time are sorted in ascending order (or in descending order) and displayed on the LCD 16. Thus, each of the files is displayed so as to be moved or flowed on an operation screen.

In this MFP 1, where the user replaces the files being displayed in the slide display by operating the touch panel 17, the user can sensuously and easily adjust the number of the files to be replaced (i.e., an amount of a movement of the files being displayed) in accordance with the number of input objects (e.g., fingers) used for the operation (i.e., a change of an area of the finger(s)). It is noted that the images are displayed on the LCD 16 on the basis of a selected predetermined one of image data stored in a RAM 13 (an image storing portion) which will be described below. The image data stored in the RAM 13 includes image data respectively corresponding to the plurality of the files, and the image data corresponding to the file the user wants to display on the LCD 16 is selected. Further, the slide display is a processing performed where the user changes the file he or she wants to display on the LCD 16. In this case, image data different from that based on which an image is being displayed is selected from the RAM 13, and an image is displayed on the LCD 16 on the basis of the selected image data.

It is noted that a degree in which the image to be displayed on the LCD 16 is changed (slid) is determined on the basis of a command of the user, and the degree is expressed as a changing amount. For example, images being displayed are displayed such that a file whose display number is "1" is a head or first file, for example. Where a content of the display is changed to a display in which the head file is changed from the file whose display number is "1" to a file whose display number is "4", for example, a difference "3" of the display number is set as the changing amount, and the image data selected from the RAM 13 is changed on the basis of the set changing amount. Where the difference of the display number is increased (i.e., is made larger), the image data is selected from the RAM 13 on the basis of the increased changing amount. Where the difference of the display number is decreased (i.e., is made smaller), the image data is selected from the RAM 13 on the basis of the decreased changing amount The image data stored in the RAM 13 is stored in order in which the files are displayed on the LCD 16, and thus where the changing amount is a certain amount, the image data to be selected is stored at a position far from the image data based on which the file is being displayed, compared to the case where the changing amount is an amount smaller than the certain amount, Thus, a position of the RAM 13 which is to be referred to is determined on the basis of the set changing amount, then the image data located at the position is selected, and finally the image is displayed on the LCD 16 on the basis of the image data.

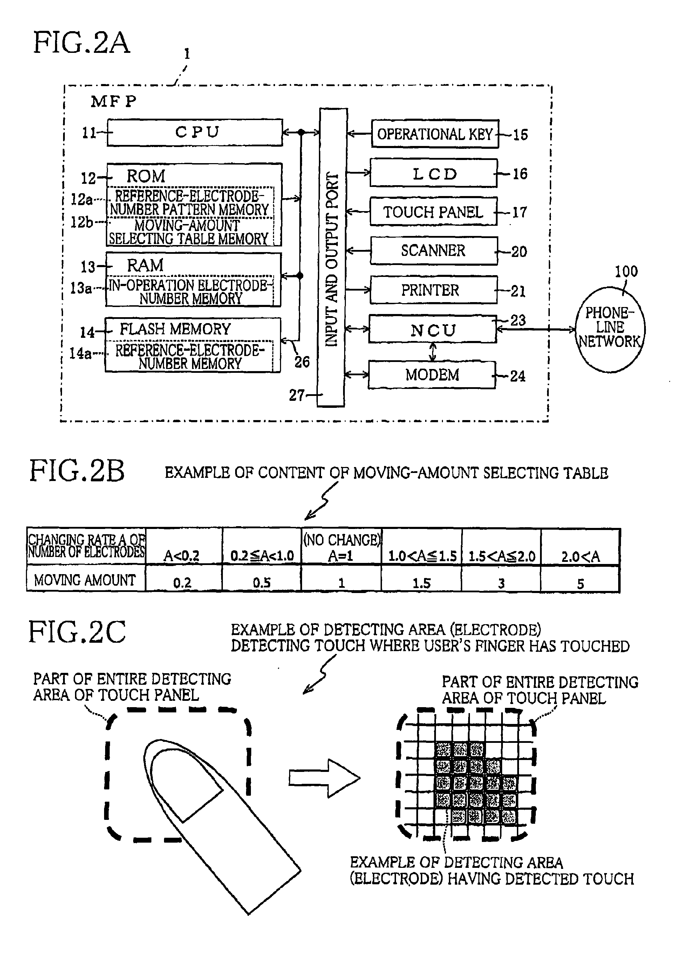

The MFP 1 is configured to perform facsimile communication with an external device, not shown, connected via a phone-line network 100 (with reference to Fig. 2A). Further, this MFP 1 has various functions such as a printer function, a scanner function, and a copying function.

On an upper front portion of the MFP 1, there is provided an operational panel 6 having an elongated shape. This operational panel 6 is for operating the MFP 1 and is mainly provided with the operational keys 15, the LCD 16, and the touch panel 17. The user can set and control the various functions by operating various buttons of the operational keys 15 or by operating the touch panel 17.

On the LCD 16, there are displayed, e.g., a menu, an operational procedure, and a state of a processing currently being performed. The touch panel 17 as one type of the inputting apparatus is provided on a display screen of the LCD 16. Thus, touch of the user's finger on an image displayed on the LCD 16, e.g., an image of a key or a button (hereinafter may be referred to as "key image") means touch of the finger on the touch panel 17 provided on the display screen of the LCD I6.

An entire surface of the touch panel 17 is minutely separated into a plurality of areas like a grid (for example, with 1mm pitches), and an electrode (i.e., a sensor) for detecting the touch or an approach of the finger is provided in each of the areas (hereinafter, may be referred to as "detecting areas"). That is, the electrode functions as an approach-touch area as an area the finger has approached or touched. It is noted that each detecting area is sufficiently smaller than an area of the finger which touches the touch panel 17, and thus where the user's finger has touched the touch panel 17, a plurality of the detecting areas are touched by the finger.

In this touch panel 17, where the touch of the finger is detected, all of ones of the detecting areas which are being touched by the finger are specified. A CPU 11 (with reference to Fig. 2A) performs a processing corresponding to each image (e.g., a key image) being displayed on an area of the LCD 16 which corresponds to a position of the finger, in accordance with the position of the finger detected by the touch panel 17, specifically, in accordance with a position of each of the detecting areas being touched by the finger (i.e., a position of each electrode being touched by the finger) and/or a total number of the detecting areas being touched by the finger (i.e., the total number of the electrodes being touched by the finger).

There will be next explained an electric construction of the MFP 1 with reference to Fig. 2A. The MFP 1 mainly includes the CPU 11, a ROM 12, the RAM 13, a flash memory 14, the operational keys 15, the LCD 16, the touch panel 17, a scanner 20, a printer 21, an NCU 23, and a modem 24.

The CPU 11, the ROM 12, the RAM 13, and the flash memory 14 are connected to each other via a bus line 26. Further, the operational keys 15, the LCD 16, the touch panel 17, the scanner 20, the printer 21, the NCU 23, the modem 24, and the bus line 26 are connected to each other via an input and output port 27.

The CPU 11 is configured to control the various functions of the MFP 1 and to control various portions of the MFP 1 which are connected to the input and output port 27, in accordance with fixed values and programs stored in the ROM 12, the RAM 13, and the flash memory 14, or in accordance with various signals transmitted and received via the NCU 23.

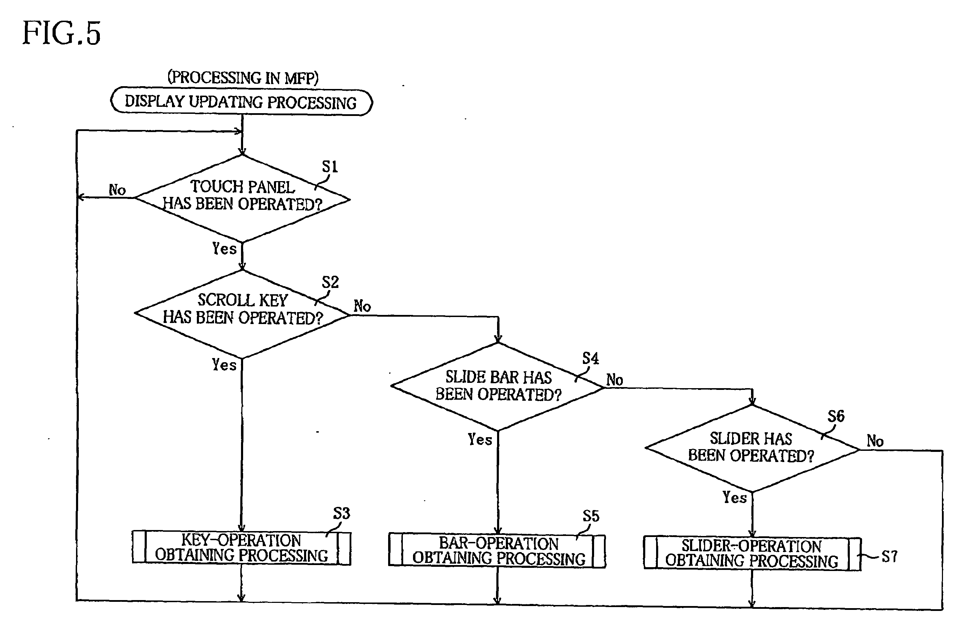

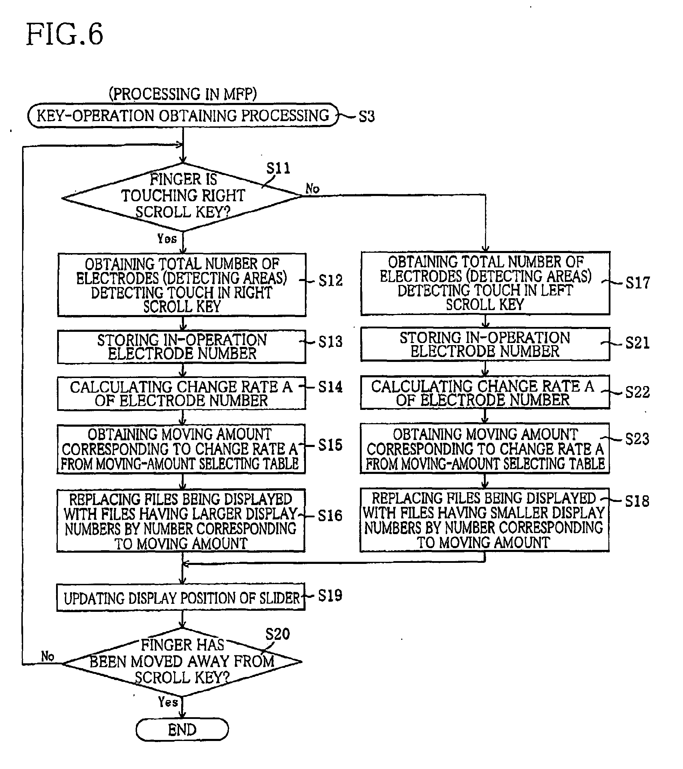

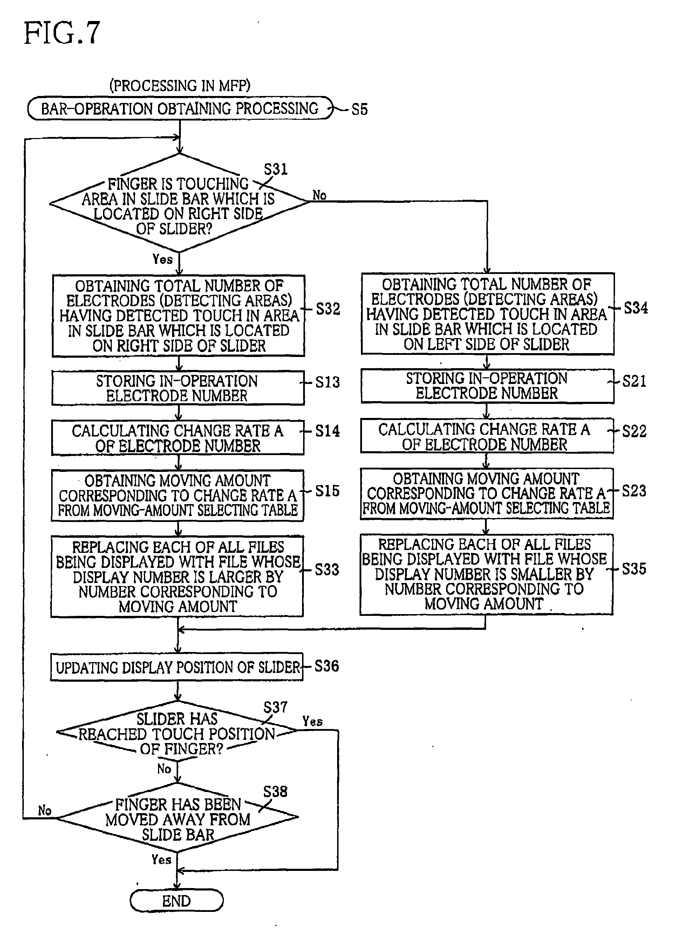

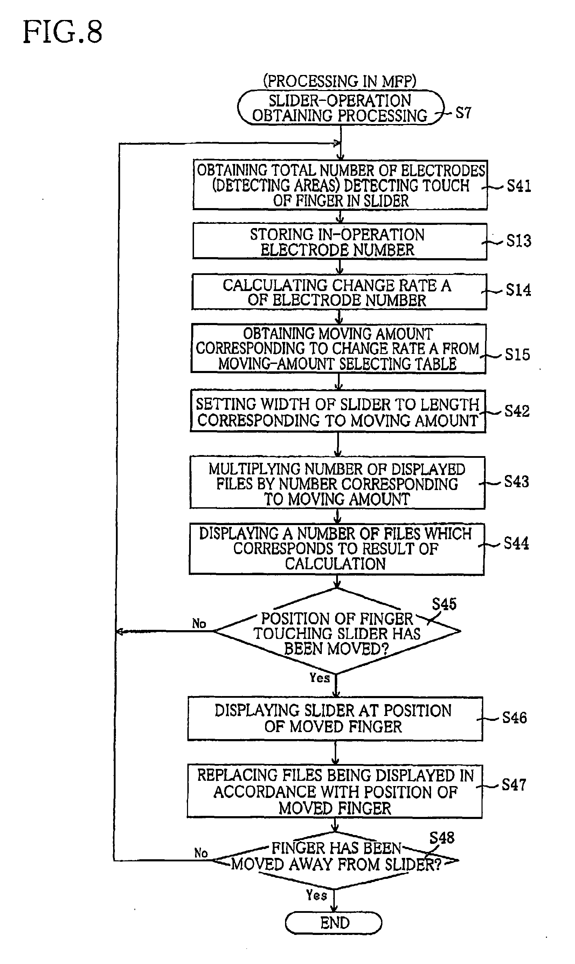

The ROM 12 is an unrewritable memory which stores, e.g., control programs performed in the MFP 1. The ROM 12 stores programs for executing or performing a display updating processing shown in a flow-chart in Fig. 5, a key-operation obtaining processing shown in a flow-chart in Fig. 6, a bar-operation obtaining processing shown in a flow-chart in Fig. 7, and a slider-operation obtaining processing shown in Fig. 8, which processings will be described below.

Further, this ROM 12 includes (a) a reference-electrode-number pattern memory 12a as a part of a reference-area storing portion configured to store a value corresponding to a reference area and (b) a moving-amount selecting table memory 12b.

There will be next explained an example of a content of a moving-amount selecting table with reference to Fig. 2B. The moving-amount selecting table is a table which is referred for setting a moving amount of the files being displayed in the slide display. This moving-amount selecting table stores a rate of each change of the number of the electrodes (hereinafter, may be referred to as a change rate A) and a moving amount corresponding to the change rate of the electrode number.

The change rate A of the electrode number represents a result of a calculation of dividing the electrode number detected during the inputting operation of the touch panel 17 (specifically, the number of the electrodes in an in-operation electrode-number memory 13a which will be described below) by a reference electrode number (specifically, the number of the electrodes in a reference-electrode-number memory 14a which will be described below). The moving amount represents a coefficient by which a preset moving amount of the files.

For example, in the moving-amount selecting table, a change rate "A=1" corresponds to a moving amount "1". This means that the moving amount of the files continues (or is not changed from) a basic state. Further, for example, the change rate A ranging "1<A≦1.5" corresponds to a moving amount "1.5". This means that the moving amount of the files increases by 1.5 times compared to that in the basic state. The other change rates A of the electrode number can be explained as thus described, and thus an explanation of which is dispensed with.

Here, returning to the explanation Fig. 2A, the electric construction of the MFP 1 will be described. The RAM 13 is a rewritable volatile memory for temporarily storing various data when various operations of the MFP 1 are performed. The RAM 13 includes the in-operation electrode-number memory 13a.

The in-operation electrode-number memory 13a is a memory for storing, during the touch of the user to the key image in the slide display, a total number of the electrodes having detected the touch of the finger(s) in the detecting area corresponding to the key image, as an in-operation electrode number.

The flash memory 14 is a rewritable nonvolatile memory. Data stored in this flash memory 14 is kept also after the MFP 1 is turned off. The flash memory 14 includes the reference-electrode-number memory 14a. The reference-electrode-number memory 14a is a memory for storing in advance, as a reference electrode number, the electrode number the user touches where the user normally operates the touch panel 17.

There will be next explained, with reference to Fig. 2C, an example of an electrode detecting the touch where the user's finger has touched the touch panel 17. It is noted that a size of each detecting area shown in Fig. 2C is different from an actual size of each detecting area because each detecting area shown in Fig. 2C is enlarged for an easier understanding purpose.

For example, in an initial setting of the MFP 1, the user is required to touch the touch panel 17 with one finger (e.g., an index finger) like in the case where the user usually operates the touch panel 17. Here, as shown in Fig. 2C, where the user touches the touch panel 17 in an ordinary manner, the electrode(s) the user is touching on the touch panel 17 with his finger is or are specified, and a total number of the specified electrode(s) is or are calculated by the CPU 11.

Then, one of the electrode numbers stored in the reference-electrode-number pattern memory 12a of the ROM 12, which one is the nearest to the calculated electrode number is selected and stored, as the reference electrode number, into the reference-electrode-number memory 14a of the flash memory 14.

As thus described, in the present embodiment, since the area (the electrode number) of the touch of the user's finger operating the MFP 1 is stored in advance, an accuracy of the calculation of the change rate A of the electrode number can be improved. That is, where the reference electrode number is set in advance as a constant, the result of the calculation of the change rate A of the electrode number is unfortunately changed in accordance with the area of the touch of the user's finger operating the MFP 1 (e.g., in accordance with a size of the user's finger). However, the area (the electrode number) of the touch of the user's finger operating the MFP 1 is detected and stored in advance, whereby the change rate A of the electrode number can be accurately calculated regardless of the size of the user's finger or the area of the touch of the user's finger.

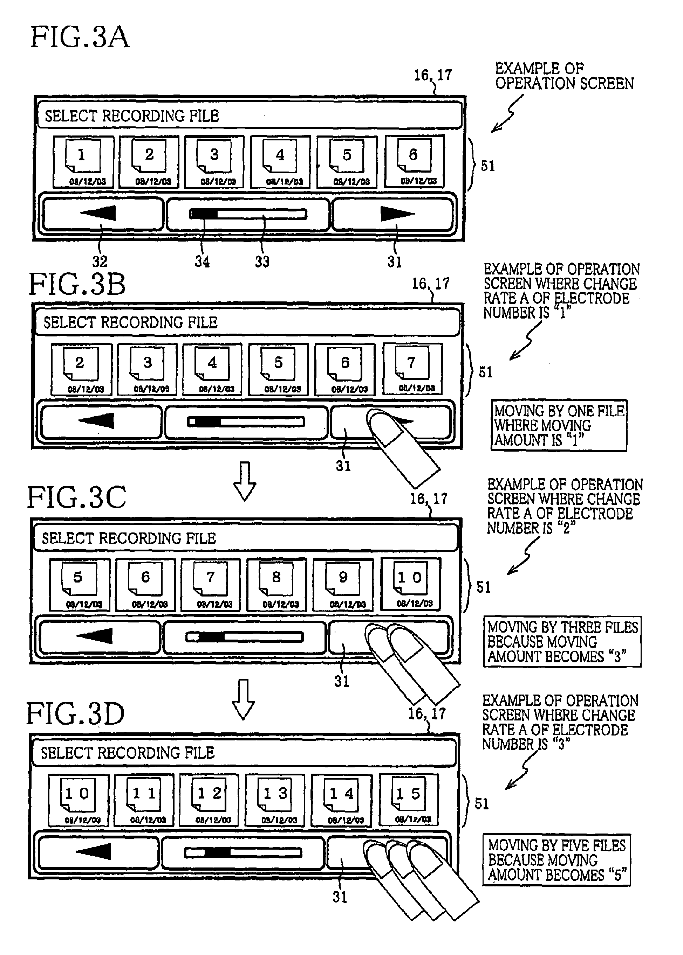

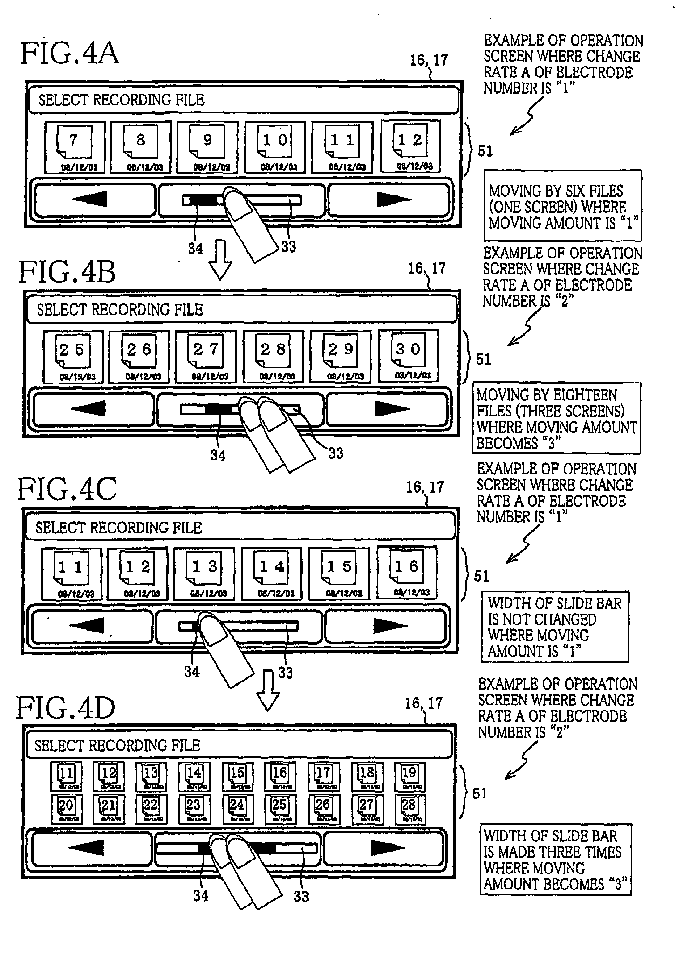

There will be next explained an example of an operating method of the touch panel 17 with reference to Figs. 3A, 3B, 3C, 3D, 4A, 4B, 4C, and 4D. Initially, the slide display displayed on the LCD 16 will be explained with reference to Fig. 3A. As shown in Fig. 3A, for example, in the slide display, there are displayed, in order from an upper side to a lower side of the LCD 16, a title of the operation screen, the predetermined number (e.g., six) of the files in a file displaying area 51 in which the files are displayed, a right scroll key 31, a left scroll key 32, a slide bar 33, and a slider 34. It is noted that each of the right scroll key 31, the left scroll key 32, the slide bar 33, and the slider 34 functions as a detecting portion configured to detect the approach-touch area indicating the area the finger has approached or touched.

In the file displaying area 51 are displayed the predetermined number (e.g., six) of the files such that the display numbers of the respective files increase in order from a left end to a right end of the displayed files. It is noted that the display numbers of the respective files are added to the files being displayed in order to easily identify the display number of each file. That is, Fig. 3A shows a case in which the files having the respective display numbers 1-6 are being displayed.

There will be next explained an example of an operating method of the right scroll key 31 in the slide display with reference to Figs. 3B-3D. It is noted that, in the following explanation, it is assumed that the user has set the reference electrode number in the initial setting by touching the touch panel 17 with one finger.

As shown in Fig. 3B, where the user has touched the right scroll key 31 displayed on the LCD 16 shown in Fig. 3A with one finger, each of the files being displayed is replaced with the file whose display number is larger than the file being displayed by one.

As described above, since the setting of the reference electrode number is performed by the user with one finger, the change rate A (which is calculated by dividing the in-operation electrode number by the reference electrode number) remains or is not changed at "1" while the user is performing the inputting operation with one singer. Then, the moving-amount selecting table (with reference to Fig. 2B) of the moving-amount selecting table memory 12b is referred to, and the moving amount "1" corresponding to the change rate A "1'° is obtained. However, since the obtained moving amount is "1", the moving amount of the files is not changed (that is, the moving amount of the files is set to an amount one time as much as a reference amount).

After the above-described state shown in Fig. 3B, as shown in Fig. 3C, where the user touches the right scroll key 31 with two fingers (one finger is added), each of the files being displayed is replaced with the file whose display number is larger than the file being displayed by three.

Where the number of the fingers using the inputting operation is increased to two, the detected electrode number is made twice compared to the case in which the number of the fingers is one (the reference number), and thus the change rate A of the electrode number becomes "2". Thus, where the moving-amount selecting table (with reference to Fig. 2B) is referred to, the moving amount of the files "3" corresponding to the change rate A "2" is obtained. Thus, the moving amount of the files is set to an amount three times as much as the reference amount.

After the above-described state shown in Fig. 3C, as shown in Fig. 3D, where the user touches the right scroll key 31 with three fingers (one more finger is added), each of the files being displayed is replaced with the file whose display number is larger than the file being displayed by five.

Where the number of the fingers used for the inputting operation is increased to three, the detected electrode number is made three times compared to the case in which the number of the fingers is one (the reference number), and thus the change rate A of the electrode number becomes "3". Thus, where the moving-amount selecting table (with reference to Fig. 2B) is referred to, the moving amount "5" corresponding to the change rate A "3" is obtained. Thus, the moving amount of the files is set to an amount five times as much as the reference amount.

It is noted that, although not shown in any figures, during the touch of the user to the left scroll key 32, like the above-described explanation, each of the files being displayed is replaced with the file whose display number is smaller than the file being displayed in accordance with an amount of change of the number of the user's fingers, and each file whose display number is smaller than the file being displayed are displayed in the file displaying area 51.

There will be next explained an example of the operating method of the touch panel 17 with reference to Fig. 4. It is noted that, in the following explanation, it is assumed that the user has set the reference electrode number in the initial setting by touching the touch panel 17 with one finger.

There will be initially explained an example of an operating method of the slide bar 33. The slide bar 33 has a rod-like shape so as to overlap with the detecting area and an entire length representing a total number (i.e., a total number of a size or an amount) of the image data corresponding to each file. Further, the slide bar 33 has a plurality of sections defined at predetermined pitches from one to the other of opposite ends of the slide bar 33, and the image data is assigned to each of the sections. As shown in Fig. 4A, where the user touches with one finger a portion of an entire area of the slide bar 33 displayed on the LCD 16 shown in Fig. 3A, which portion is located on a right side of the slider 34, each of all the six files being displayed are replaced with the file whose display number is larger than the file being displayed by six.

After the above-described state shown in Fig. 4A, as shown in Fig. 4B, where the user touches the slide bar 33 with two fingers (one finger is added), the moving amount of the files is set to an amount three times as much as a reference amount, and thus each of all the six files being displayed are replaced with the file whose display number is larger than the file being displayed by eighteen.

It is noted that, although not shown in any figures, during the touch of the user to a portion of the entire area of the slide bar 33 which is located on a left side of the slider 34, like the above-described explanation, each of all the six files being displayed is replaced with the file whose display number is smaller than the file being displayed in accordance with an amount of change of the number of the user's fingers, and each file whose display number is smaller than the file being displayed are displayed in the file displaying area 51.

There will be next explained an example of an operating method of the slider 34. The slider 34 moves on the slider bar 33 so as to follow the approach-touch area while having a length according to the number of pixels of the image displayed on the LCD 16. As shown in Fig. 4C, where the user moves his or her finger rightward in a state in which the user is touching with one finger the slider 34 on the LCD 16 shown in Fig. 3A, a display position (i.e., a position of the display) of the slider 34 is moved so as to follow the finger. As a result, the files being displayed are replaced with the files corresponding to a display position of the slider 34 which has been moved rightward, and the files corresponding to the display position of the slider 34 which has been moved rightward are displayed on the LCD 16. Thus, the files whose display numbers are larger than those of the files previously displayed are displayed.

For example, as shown in Fig. 4C, where the display position of the slider 34 which has been moved rightward is a position corresponding to the files respectively having the display numbers 11-16, all the files having the display numbers 1-6 displayed in the file displaying area 51 are replaced with the files having the display numbers 11-16.

After the above-described state shown in Fig. 4C, as shown in Fig. 4D, where the user touches the slider 34 with two fingers (one finger is added), the moving amount of the files is set to an amount three times as much as a reference amount, and thus the number of the files being displayed is increased from six to eighteen. Further, the slider 34 is extended three times in a widthwise direction thereof.

Specifically, in addition to all the files respectively having the display numbers 11-16 and displayed in the file displaying area 51, as shown in Fig. 4D, the files respectively having the display numbers 17-28 are simultaneously displayed. Thus, as shown in Fig. 4D, the eighteen files respectively having the display numbers 11-28 are displayed in the file displaying area 51.

Further, since the number of the files being displayed is changed from six to eighteen (is made three times), a ratio of the number of the files currently being displayed to the number of all the files is also changed. As a result, the slider 34 is displayed so as to be extended three times in the widthwise direction thereof.

The user can change the display position of the slider 34 in a state in which a larger number of the files than usual (the reference number) are displayed, by moving his or her finger rightward or leftward while touching the slider 34. Where the display position of the slider 34 is changed, the files corresponding to the position are displayed in the file displaying area 51.

There will be next explained the display updating processing performed by the CPU 11 of the MFP 1 with reference to Fig. 5. The display updating processing is a processing for replacing the files in the slide display in accordance with the inputting operation of the user, and is repeatedly performed from turning on a main power of the MFP 1 until the main power is turned off.

In this display updating processing, initially in S1, the CPU 11 judges whether the touch panel 17 has been operated by the user or not. Where the CPU 11 has judged that the touch panel 17 has not been operated by the user (S1: No), the CPU 11 waits until the touch panel 17 is operated by the user. Where the CPU 11 has judged that the touch panel 17 has been operated by the user (S1: Yes), the CPU 11 judges in S2 whether the right scroll key 31 or the left scroll key 32 in the slide display has been operated by the user or not.

Where the CPU 11 has judged that the right scroll key 31 or the left scroll key 32 has been operated (S2: Yes), the CPU 11 performs in S3 the key-operation obtaining processing and then repeats the above-described processings S1-S3. It is noted that, although described later in detail, the key-operation obtaining processing is a processing for replacing the files in the slide display in accordance with a type of the scroll key 31 or 32 the user is touching and an amount of the change of the number of the fingers touching the scroll key 31 or 32.

On the other hand, where the CPU 11 has judged that the right scroll key 31 or the left scroll key 32 has not been operated (S2: No), the CPU 11 judges in S4 whether the slide bar 33 has been operated by the user or not. Where the CPU 11 has judged that the slide bar 33 has been operated (S4: Yes), the CPU 11 performs in S5 the bar-operation obtaining processing and then repeats the above-described processings S1-S5.

It is noted that, although described later in detail, the bar-operation obtaining processing is a processing for replacing the files in the slide display in accordance with a position of the slide bar 33 the user is touching and an amount of the change of the number of the fingers touching the slide bar 33.

On the other hand, where the CPU 11 has judged that the slide bar 33 has not been operated (S4: No), the CPU 11 judges in S6 whether the slider 34 has been operated by the user or not Where the CPU 11 has judged that the slider 34 has been operated (S6: Yes), the CPU 11 performs in S7 the slider-operation obtaining processing and then repeats the above-described processings S1-S7.

It is noted that, although described later in detail, the slider-operation obtaining processing is a processing for replacing the files in the slide display in accordance with a direction of a movement (a moving direction) of the finger in a state in which the user is touching the slider 34 and an amount of the change of the number of the fingers touching the slider 34.

On the other hand, where the CPU 11 has judged that the slider 34 has not been operated (S6: No), the user is touching an area in the touch panel 17 which does not relate to the scroll keys 31, 32, the slide bar 33, and the slider 34. Thus, the CPU 11 does not perform any processing and returns to the processing of S1, and repeats the above-described processings S1-S6.

There will be next explained the key-operation obtaining processing (S3) performed by the CPU 11 of the MFP 1 with reference to Fig. 6. The same reference numerals are used for steps of the key-operation obtaining processing in which the CPU 11 performs the same processing, and an explanation of which is dispensed with.

This key-operation obtaining processing (S3) is the processing for replacing the files in the slide display in accordance with the type of the scroll key 31 or 32 the user is touching and the amount of the change of the number of the fingers touching the scroll key 31 or 32.

In this key-operation obtaining processing, initially in S11, the CPU 11 judges whether the user's finger is touching the right scroll key 31 or not. Where the CPU 11 has judged that the user's finger is touching the right scroll key 31 (511: Yes), the CPU 11 obtains in S12 a total number of the electrodes detecting the touch of the finger in the right scroll key 31.

Next, in S 13, the CPU 11 stores the obtained number of the electrodes as the in-operation electrode number into the in-operation electrode-number memory 13a of the RAM 13. Then, in S14, the CPU 11 calculates the change rate A of the electrode number by dividing the in-operation electrode number by the reference electrode number using the reference electrode number stored in the reference-electrode-number memory 14a of the flash memory 14 and the in-operation electrode number of the in-operation electrode-number memory 13a.

Then, in S15, the CPU 11 obtains a moving amount corresponding to the change rate A calculated in S14 by referring to the moving-amount selecting table of the moving-amount selecting table memory 12b of the ROM 12.

Then, in S16, the CPU 11 replaces, in the slide display, the files being displayed in the file displaying area 51 with the files respectively having larger display numbers by the number corresponding to the moving amount obtained in S15, and the processing goes to S 19. That is, in S16, each file is displayed such that a difference between the display number (or a page) of the file being displayed and a certain display number (or a certain page) of the file to be displayed becomes a predetermined difference.

For example, where the moving amount obtained in S15 is "3", three of the files being displayed in the file displaying area 51, which three files have display numbers smaller than those of the other files being displayed in the file displaying area S1, are replaced with the files having display numbers larger than those of the three files.

Where the CPU 11 has judged that the user's finger is not touching the right scroll key 31 (S11: No), the user's finger is touching the left scroll key 32. In this case, the CPU 11 obtains in S 17 a total number of the electrodes detecting the touch of the finger in the left scroll key 32.

Then, after performing processings the same as the above-described processings S21-S23, the CPU 11 replaces, in S18, in the slide display, the files being displayed in the file displaying area 51 with the files respectively having smaller display numbers by the number corresponding to the moving amount obtained in S23, and the processing goes to S 19.

For example, where the moving amount obtained in S23 is "5", five of the files being displayed in the file displaying area 51, which five files have display numbers larger than those of the other files being displayed in the file displaying area 51, are replaced with the files having display numbers smaller than those of the five files.

Then, in S19, the CPU 11 updates the display position of the slider 34 in the slide display in accordance with the display number of each file newly displayed in S16 or S18. Then, in S20, the CPU 11 judges whether the user's finger is moved away or distant from the right scroll key 31 or the left scroll key 32. Where the CPU 11 has judged that the user's finger is touching the right scroll key 31 or the left scroll key 32 (S20: No), the CPU 11 repeats the above-described processings S11-S23.

On the other hand, where the user's finger is moved away or distant from the right scroll key 31 or the left scroll key 32 (S20: Yes), the CPU 11 finishes the key-operation obtaining processing.

In this the key-operation obtaining processing indicated by the flow-chart shown in Fig. 6, the files in the slide display can be replaced in accordance with the type of the scroll key 31 or 32 the user is touching and the amount of the change of the number of the fingers touching the scroll key 31 or 32.

Further, where the number of the fingers touching the scroll key 31 or 32 is changed during the operation of the user for the scroll key 31 or 32 (i.e., while the user's finger is touching the scroll key 31 or 32), the moving amount of the files (i.e., the number of the replaced files) can be changed in accordance with the amount of the change of the number of the fingers.

Thus, where the user changes the number of the fingers touching the scroll key 31 or 32 while touching the scroll key 31 or 32, the user can change the moving amount of the files displayed in the file displaying area 51. Thus, the user can easily and sensuously adjust the moving amount of the files displayed in the file displaying area 51.

There will be next explained the bar-operation obtaining processing (S5) performed by the CPU 11 of the MFP 1 with reference to Fig. 7. In the explanation of this bar-operation obtaining processing, the same reference numerals as used in the processings in the above-described key-operation obtaining processing in Fig. 6 are used for representing the same processings as those in the above-described key-operation obtaining processing, and an explanation of which is dispensed with.

This bar-operation obtaining processing (S5) is a processing for replacing the files in the slide display in accordance with the position of the slide bar 33 the user is touching and the amount of the change of the number of the fingers touching the slide bar 33.

In the bar-operation obtaining processing, initially, in S31, the CPU 11 judges whether the user's finger is touching an area in the slide bar 33 which is located on a right side of the slider 34. Where the CPU 11 has judged that the user's finger is touching the area in the slide bar 33 which is located on the right side of the slider 34 (S31: Yes), the CPU 11 obtains in S32 a total number of the electrodes having detected the touch of the finger in the area in the slide bar 33 which is located on the right side of the slider 34.

Then, after performing the processings S13-S15 in order, in S33, the CPU 11 replaces each of all the files being displayed in the file displaying area 51 in the slide display with the file whose display number is larger than the file being displayed by the number corresponding to the moving amount obtained in S15, and the CPU 11 displays each file whose display number is larger than the file being displayed. Then, the processing goes to S36.

For example, where the moving amount obtained in S15 is "3", each of all the files being displayed in the file displaying area 51 is replaced with the file whose display number is larger than the file being displayed by eighteen. Where the moving amount obtained in S15 is "1 ", each of all the files being displayed in the file displaying area 51 is replaced with the file whose display number is larger than the file being displayed by six. In other words, all the files being displayed in the file displaying area 51 are replaced with the files having the following numbers.

Where the CPU 11 has judged in S31 that the user's finger is not touching the area in the slide bar 33 which is located on the right side of the slider 34 (S31: No), the user's finger is touching an area in the slide bar 33 which is located on a left side of the slider 34. In this case, the CPU 11 obtains in S34 a total number of the electrodes having detected the touch of the finger in the area in the slide bar 33 which is located on the left side of the slider 34.

Then, after performing the processings S21-S23 in order, in S35, the CPU 11 replaces each of all the fides being displayed in the file displaying area 51 in the slide display with the file whose display number is smaller than the file being displayed by the number corresponding to the moving amount obtained in S23, and the CPU 11 displays each file whose display number is smaller than the file being displayed. Then, the processing goes to S36.

For example, where the moving amount obtained in S23 is "3", each of all the files being displayed in the file displaying area 51 is replaced with the file whose display number is smaller than the file being displayed by eighteen.

Then, in S36, the CPU 11 updates the display position of the slider 34 in the slide display in accordance with the display number of each file newly displayed in S33 or S35. Then, in S37, the CPU 11 judges whether the slider 34 has reached a position (i.e., a touch position) at which the user's finger has touched the slide bar 33 or not Where the CPU 11 has judged that the slider 34 has reached the touch position of the user's finger (S37: Yes), the CPU 11 finishes this bar-operation obtaining processing.

As a result of this bar-operation obtaining processing, the files displayed in the file displaying area 51 are updated regularly (for example, at intervals of two seconds) until the display position of the slider 34 has reached the touch position of the user's finger.

Thus, where the display position of the slider 34 has not reached the touch position of the user's finger yet, the user can change contents of the files to be displayed in the file displaying area 51 when the files has been updated, by changing the touch position of the finger to another position.

On the other hand, where the CPU 11 has judged in S37 that the slider 34 has not reached the touch position of the user's finger (S37: No), the CPU 11 judges in S38 whether the user's finger has been moved away or is distant from the slide bar 33.

Where the CPU 11 has judged that the user's finger is touching the slide bar 33 (S38: No), the CPU 11 repeats the above-described processings S13-S15, S21-S232, and S31-S38. On the other hand, where the CPU 11 has judged that the user's finger has been moved away or is distant from the slide bar 33 (S38: Yes), the CPU 11 finishes the bar-operation obtaining processing.

In this bar-operation obtaining processing indicated by the flow-chart shown in Fig. 7, the files in the slide display can be replaced in accordance with the position of the slide bar 33 the user is touching and the amount of the change of the number of the fingers touching the slide bar 33.

Further, where the number of the fingers touching the slide bar 33 is changed during the operation of the user for the slide bar 33 (i.e., while the user's finger is touching the slide bar 33), the moving amount of the files (i.e., the number of the files to be replaced) can be changed in accordance with an amount of the change of the number of the fingers.

Thus, where the user changes the number of the fingers touching the slide bar 33 while touching the slide bar 33, the moving amount of the files displayed in the file displaying area 51 can be changed. Consequently, the user can sensuously and easily adjust the moving amount of the files displayed in the file displaying area 51.

There will be next explained the slider-operation obtaining processing (S7) performed by the CPU 11 of the MFP 1 with reference to Fig. 8. In the explanation of this slider-operation obtaining processing, the same reference numerals as used in the processings in the above-described key-operation obtaining processing in Fig. 6 are used for representing the same processings as those in the above-described key-operation obtaining processing, and an explanation of which is dispensed with.

This slider-operation obtaining processing (S7) is a processing for replacing the files in the slide display in accordance with the moving direction of the finger in the state in which the user is touching the slider 34 and the amount of the change of the number of the fingers touching the slider 34.

In the slider-operation obtaining processing, initially, in S41, the CPU 11 obtains a total number of the electrodes detecting the touch of the finger in the slider 34. Then, after performing the processings S13-S15 in order, in S42, the CPU 11 sets, in the slide display, a width of the slider 34 to a length corresponding to the moving amount obtained in S15. For example, where the moving amount obtained in S15 is "3", the length of the slider 34 is made three times. Thus, the user can visually identify an amount of the slide.

Then, in S43, the CPU 11 multiplies the predetermined number (six in the present embodiment) of the displayed files (i.e., the number of the files displayed in the file displaying area 51) by the number corresponding to the moving amount obtained in S15. Then, in S44, the CPU 11 displays, in the file displaying area 51, a number of the files which corresponds to a result of the calculation.

For example, where the moving amount obtained in S15 is "3", the number of the files displayed in the file displaying area 51 is made three times, and thus a total of the eighteen files are displayed in the file displaying area 51. Thus, the user can visually identify the amount of the slide.

Then, in S45, the CPU 11 judges whether the position of the user's finger touching the slider 34 has been moved or not Where the CPU 11 has judged that the position of the user's finger touching the slider 34 has not been moved (S45: No), the CPU 11 repeats the above-described processings S13-S15 and S41-S45.

On the other hand, where the CPU 11 has judged that the position of the user's finger touching the slider 34 has been moved (S45: Yes), the CPU 11 displays in S46 the slider 34 so as to overlap with the position of the moved user's finger. Then, in S47, the CPU 11 replaces the files being displayed in the file displaying area 51 in accordance with the position of the moved user's finger and displays other files.

For example, where the user moves his or her finger rightward while touching the slider 34, the display position of the slider 34 is changed so as to follow the position at which the finger is touching the slide bar 33. Where the display position of the slider 34 is changed, the files corresponding to the display position of the slider 34 which has been moved rightward are displayed in the file displaying area 51 in a state in which the number of the displayed files is increased. It is noted that where the user moves his or her finger leftward while touching the slider 34, the display position of the slider 34 is moved leftward, and thus the files having smaller display numbers are displayed in the file displaying area 51.

Then, in S48, the CPU 11 judges whether the user's finger has been moved away from the slider 34 or not. Where the CPU 11 has judged that the user's finger is touching the slider 34 (S48: No), the CPU 11 repeats the above-described processings. On the other hand, where the CPU 11 judges that the user's finger has been moved away from the slider 34 (S48: Yes), the CPU 11, finishes this slider-operation obtaining processing.

In this slider-operation obtaining processing indicated by the flow-chart shown in Fig. 8, the files in the slide display can be replaced in accordance with the moving direction of the finger moved in the state in which the user's finger is touching the slider 34 and the amount of the change of the number of the fingers touching the slider 34.

Further, where the number of the lingers touching the slider 34 has been changed during the operation of the user for the slider 34 (while the user's finger is touching the slider 34), the number of the files displayed in the file displaying area 51 can be changed in accordance with the amount of the change of the number of the fingers touching the slider 34.

Thus, where the user changes the number of the fingers touching the slider 34 while touching the slider 34, the user can change the number of the files displayed in the file displaying area 51. Consequently, the user can sensuously and easily adjust the number of the files displayed in the file displaying area 51.

In view of the above, the CPU 11 can be considered to include a selecting section which is configured to select a part of image data stored in the RAM 13, the part corresponding to the image to be displayed on the LCD 16 and which performs the processings of S16, S18, S33, S35, and S47. Further, the CPU 11 can be considered to include a display controlling section which is configured to display the image on the LCD 16 on the basis of the selected part of image data and which also performs the processings of S16, S18, S33, S35, and S47. Further, the CPU 11 can be considered to include a change commanding section which is configured to command to change the image to be displayed on the LCD 16 where the scroll key 31, 32, the slide bar 33, or the slider 34 has detected the approach-touch area and which performs the processings of S2, S4, and S6. Further, the CPU 11 can be considered to include a changing-amount determining section which is configured to determine, in accordance with the command by the change commanding section, the changing amount of the image to be displayed on the display portion depending upon an area of the approach-touch area detected by the detecting portion, and which performs the processing of S15. Further, the CPU 11 can be considered to include an approach-touch area obtaining section which is configured to obtain a value corresponding to the area of the approach-touch area and which performs the processings of S12, S17, S32, S34, and S41. Further, the CPU 11 can be considered to include a judging section which is configured to judge whether the value corresponding to the area of the approach-touch area has been changed with respect to a value corresponding to the reference area or not and which performs the processings of S14 and S22.

While the embodiment of the present invention has been described above, it is to be understood that the invention is not limited to the details of the illustrated embodiment, but may be embodied with various changes and modifications, which may occur to those skilled in the art, without departing from the spirit and scope of the invention.

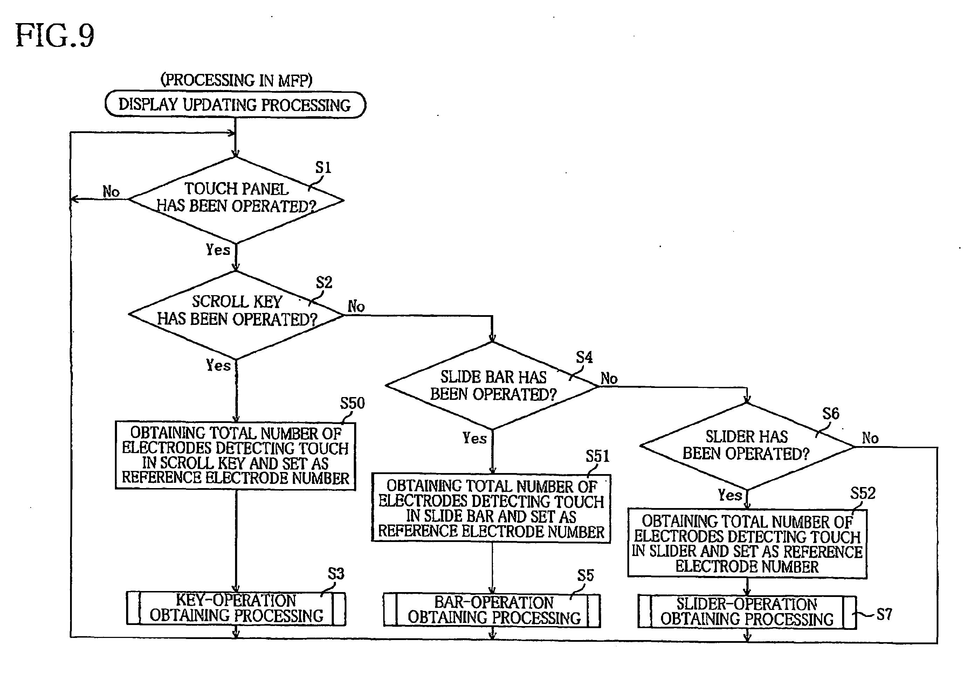

For example, in the present embodiment, the reference,electrode-number pattern memory 12a of the ROM 12 stores in advance a plurality of the electrode numbers each as the reference electrode number, but the MFP 1 may be configured such that, each time when the user's finger touches the key image, a total number of the electrodes at a time when the touch of the user's finger is detected for the first time are stored each as the reference number in the flash memory 14 instead of the reference-electrode-number pattern memory 12a. There will be explained this configuration as a modification of the present embodiment. In this modification, a processing shown in Fig. 9 is performed as the display updating processing. In Fig. 9, the CPU 11 judges in S1 whether the touch panel 17 has been operated or not. Where the CPU 11 has judged that the touch panel 17 has been operated (S1: Yes), the CPU 11 judges in S2 whether the scroll key 31 or 32 has been operated or not Where the CP1T 11 has judged that the scroll key 31 or 32 has been operated (S2: Yes), the CPU 11 obtains in S50 a total number of the electrodes detecting the touch in the scroll key 31 or 32 and sets the obtained total number of the electrodes as the reference electrode number. That is, each time when the user has touched the touch panel 17, the CPU 11 sets the number of the electrodes the user's finger is touching as the reference electrode number. Likewise, where the CPU 11 has judged that the slide bar 33 has been operated (S4: Yes), the CPU 11 obtains in S51 a total number of the electrodes detecting the touch in the slide bar 33 and sets the obtained total number of the electrodes as the reference electrode number. Further, where the slider 34 has been operated (S6: Yes), the CPU 11 obtains in S52 a total number of the electrodes detecting the touch in the slider 34 and sets the obtained total number of the electrodes as the reference electrode number. In the case where the MFP 1 is thus configured, especially where an indefinite number of users use the MFP 1, the reference electrode number does not need to be set in advance for each user, thereby improving a usability of the MFP 1. Further, since the reference-electrode-number pattern memory 12a may be omitted, a free space of the ROM 12 can be increased, so that programs relating to other processings can be stored into or added to the ROM 12.

Further, in the present embodiment, the moving-amount selecting table is prepared in advance, but the MFP 1 may be configured such that the user can set each parameter in the moving-amount selecting table (i.e., a range of the change rate A of the electrode number and a moving amount corresponding thereto) to any value. Where the MFP 1 is thus configured, the moving amount can be set as desired by the user, thereby improving the usability of the MFP 1.

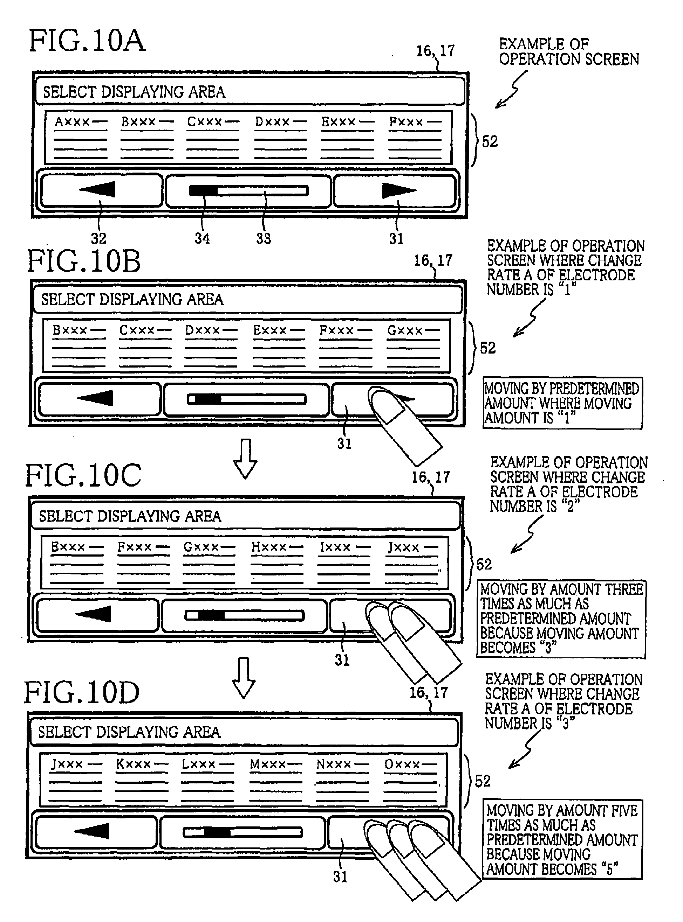

It is noted that, in the above-described embodiment, as shown in Figs. 3A-4D, an image including the predetermined number (six in the above-described embodiment) of images respectively corresponding to the plurality of files is displayed in the file displaying area 51 as the image displayed on the LCD 16, but the present invention is not limited to this configuration. For example, it is possible that, where an image larger than the displaying area of the LCD 16 (e.g., an image of a newspaper article or a display image of a browser) is displayed on the LCD 16, an area of the image to be displayed on the LCD 16 is designated using the touch panel 17 of the present invention. For example, as shown in Fig. 10A, an image of newspaper articles is partly displayed in the file displaying area 52, and an article titled "Axxx" is disposed in a left end portion of the file displaying area 52. Further, the image of the newspaper articles includes a predetermined articles disposed in the image. In the case of Fig. 10A, the article titled "Axxx" as a head or first article, and articles titled "Bxxx", "Cxxx", "Dxxx", "Exxx", and "Fxxx" are disposed in order from a left to a right side of the image, In the case where this image is being displayed on the LCD 16, where the user has touched the right scroll key 31 with one finger, the image is moved by a predetermined amount, and as shown in Fig. 10B, a content of the image is changed such that the article titled "Bxxx" is displayed in the left end portion of the file displaying area 52. Further, where the user has touched the right scroll key 31 with two fingers, the image is moved by an amount three times as much as the predetermined amount Where the user has touched the right scroll key 31 with three fingers, the image is moved by an amount five times as much as the predetermined amount. That is, the image is moved by the changing amount such that a difference (a distance) between a position of an area of the image which is being displayed on the LCD 16 and a position of a certain area of the image to be displayed becomes a predetermined difference (a distance). Thus, where the user changes the number of the fingers touching the right scroll key 31 while touching, the moving amount of the image displayed in the file displaying area 52 can be changed. It is noted that, in the above-described embodiment and modification, the image displayed on the LCD 16 is moved in a lateral direction, but the present invention is applicable to a configuration in which the image displayed on the LCD 16 is moved in a vertical direction.

## Claims

1. An inputting apparatus (1) comprising:
a display portion (16) on which an image is displayed;
an image storing portion (13) configured to store image data based on which the image is displayed;
a selecting section (S16) configured to select a part of image data stored in the image storing portion, the part corresponding to the image to be displayed on the display portion;
a display controlling section (S16) configured to display the image on the display portion on the basis of the selected part of image data;
a detecting portion (31, 32, 33, 34) configured to detect an approach-touch area of a detecting area to which is assigned a command for changing the image to be displayed on the display portion, the approach-touch area having detected the approach or the touch of an input object;
a change commanding section (S2, S4, S6) configured to command to change the image to be displayed on the display portion where the detecting portion has detected the approach-touch area; and
a changing-amount determining section (S15) configured to determine, in accordance with the command by the change commanding section, a changing amount of the image to be displayed on the display portion depending upon an area of the approach-touch area detected by the detecting portion,
wherein the selecting section is configured to change the image data to be selected, in accordance with the changing amount determined by the changing-amount determining section.

2. The inputting apparatus according to claim 1,
wherein the display controlling section is configured to display a plurality of images each having a display number on the display portion in a predetermined order on the basis of the image data, and
wherein the display controlling section is configured to display, on the basis of the changed image data, at least one image respectively having a display number which is different from that of said at least one image previously displayed.

3. The inputting apparatus according to claim 2,
wherein the display controlling section is configured to display at least an image having a certain display number on the display portion on the basis of the selected part of image data, and
wherein the changing-amount determining section is configured to determine the changing amount such that a difference between the display number of the image to be displayed on the display portion and the certain display number becomes a predetermined difference.

4. The inputting apparatus according to any one of claims 1-3,
wherein the display controlling section is configured to display a plurality of images respectively corresponding to a plurality of pages, in order of the plurality of pages on the basis of the image data,
wherein the display controlling section is configured to display at least an image corresponding to a certain page on the display portion on the basis of the image data selected by the selecting section, and
wherein the changing-amount determining section is configured to determine the changing amount such that a difference between the page of the image to be displayed on the display portion and the certain page becomes a predetermined difference.

5. The inputting apparatus according to claim 4,
wherein the changing-amount determining section is configured to increase the changing amount where the predetermine difference takes a certain value than where the predetermined difference takes a value smaller than the certain value.

6. The inputting apparatus according to claim 1,
wherein where the selecting section has selected a part of the image data, a specific area of the image is displayed on the display portion on the basis of the selected the part of the image data, and
wherein the display controlling section is configured to display an area of the image which is changed from the specific area, by displaying the image on the basis of the changed image data.

7. The inputting apparatus according to claim 6,
wherein the display controlling section is configured to display a certain area of the image on the display portion on the basis of the selected part of the image data, and
wherein the changing-amount determining section is configured to determine the changing amount such that a difference between a position of an area of the image to be displayed on the display portion and a position of the certain area of the image becomes a predetermined difference.

8. The inputting apparatus according to any one of claims 1-7, further comprising:
a reference-area storing portion (12a) configured to store a value corresponding to a reference area; and
an approach-touch area obtaining section (S12, S17, S32, S34, S41) configured to obtain a value corresponding to the area of the approach-touch area,
wherein the changing-amount determining section is configured to determine the changing amount depending upon the value corresponding to the area of the approach-touch area with respect to the value corresponding to the reference area.

9. The inputting apparatus according to claim 8,
wherein the changing-amount determining section is configured to determine the changing amount depending upon a change rate of the value corresponding to the area of the approach-touch area with respect to the value corresponding to the reference area.

10. The inputting apparatus according to claim 8,
wherein the changing-amount determining section further includes a judging section (S14, S22) configured to judge whether the value corresponding to the area of the approach-touch area has been changed with respect to the value corresponding to the reference area or not, and
wherein the changing-amount determining section is configured to determine the changing amount where the judging section has judged that the value of the approach-touch area has been changed with respect to the value corresponding to the reference area.

11. The inputting apparatus according to claim 10,
wherein the changing-amount determining section is configured to determine the changing amount depending upon a change rate of the value corresponding to the area of the approach-touch area with respect to the value corresponding to the reference area.

12. The inputting apparatus according to any one of claims 1-7, further comprising an approach-touch area obtaining section (S12, S17, S32, S34, S41) configured to obtain a value corresponding to the area of the approach-touch area,
wherein the changing-amount determining section includes a judging section (S 14, S22) configured to judge whether the value corresponding to the area of the approach-touch area has been changed or not, and
wherein where the judging section has judged that the value corresponding to the area of the approach-touch area has been changed, the changing-amount determining section changes the changing amount depending upon the change.

13. The inputting apparatus according to claim 12,
wherein the changing-amount determining section is configured to change the changing amount depending upon a change rate of the value corresponding to the area of the approach-touch area.

14. The inputting apparatus according to any one of claims 3-5,
wherein the display portion includes the detecting area in a displaying area of the display portion,
wherein the display controlling section is configured to display a slide bar having a rod shape so as to overlap with the detecting area, the slide bar having an entire length representing a total number of the image data and having a plurality of sections defined at predetermined pitches from one to the other of opposite ends of the slide bar, wherein the image data is assigned to each of the sections, and
wherein the selecting section is configured to change, to the certain display number, a display number added to an image based on the image data corresponding to one of the plurality of sections which corresponds to the approach-touch area.

15. The inputting apparatus according to claim 14,
wherein the display controlling section is configured to display a slider which moves on the slider bar so as to follow the approach-touch area while having a length according to the number of pixels of the image displayed on the display portion, and
wherein where the changing amount is changed by the changing-amount determining section, a length of the slider is changed in accordance with the changing amount, and the display controlling section displays the slider having the changed length.
